# FASCICULE DE BREVET EUROPEEN

(11) **EP 1 846 326 B1**
(45) Date de publication et mention de la délivrance du brevet: **04.04.2018**
(21) Numéro de dépôt: 06709216.3
(22) Date de dépôt: 01.02.2006
(51) Int. Cl.: B01J 20/20, B01J 21/18, B01J 23/745, B82Y 30/00, B82Y 40/00, C02F 1/28, C04B 35/52, C04B 35/83, D01F 9/127, C01B 32/162

(54) **PROCEDE DE PREPARATION D'UN MATERIAU A BASE DE NANOFIBRES OU NANOTUBES ENCHEVETRES**
VERFAHREN ZUR HERSTELLUNG VON MATERIAL AUF BASIS VON VERSCHLUNGENEN NANORÖHREN ODER NANOFASERN
METHOD OF MAKING MATERIALS BASED ON TANGLED NANOTUBES OR NANOFIBRES

(30) Priorité: 03.02.2005 FR 0501105
(43) Date de publication de la demande: 24.10.2007
(73) Titulaire: Centre National de la Recherche Scientifique (C.N.R.S.), 75016 Paris (FR); Université Louis Pasteur, 67070 Strasbourg (FR)
(72) Inventeur: PHAM-HUU, Cuong, F-67700 Saverne (FR); LEDOUX, Marc-jacques, F-67000 Strasbourg (FR); BEGIN, Dominique, F-67204 Achenheim (FR); NGUYEN, Patrick, F-67000 Strasbourg (FR); AMADOU, Julien, F-34000 Montpellier (FR); TESSONNIER, Jean-philippe, F-67980 Hangenbieten (FR)
(74) Mandataire: Lavoix
(86) Numéro de dépôt international: PCT/FR2006/000223
(87) Numéro de publication internationale: WO 2006/082311

(56) Documents cités:
- WO-A-03/048039
- JP-A- 2004 244 252
- US-A- 5 458 784
- US-A1- 2001 014 307
- US-A1- 2003 211 028
- CHENG J ET AL: "Long bundles of aligned carbon nanofibers obtained by vertical floating catalyst method" MATERIALS CHEMISTRY AND PHYSICS, ELSEVIER, vol. 87, no. 2-3, 15 octobre 2004 (2004-10-15), pages 241-245, XP004532961 ISSN: 0254-0584
- GULINO G ET AL: "C2H6 as an active carbon source for a large scale synthesis of carbon nanotubes by chemical vapour deposition" APPLIED CATALYSIS A: GENERAL, ELSEVIER SCIENCE, AMSTERDAM, NL, vol. 279, no. 1-2, 28 janvier 2005 (2005-01-28), pages 89-97, XP004718175 ISSN: 0926-860X

## Description

La présente invention a trait à des matériaux nanostructurés, à base de nanofibres et/ou de nanotubes de carbone.

Les nanofibres et nanotubes de carbone sont des matériaux bien connus de l'état de la technique. Par "nanofibre ou nanotube de carbone", on entend, au sens de la présente description, une structure tubulaire à base de carbone, qui est en général essentiellement à base de carbone sous forme de feuillets de graphène, et qui possède un diamètre compris entre 2 et 200 nm (dimensions mesurables notamment à partir de clichés de microscopie électronique). Ces composés appartiennent à la famille dite des "matériaux nanostructurés", qui présentent au moins une dimension caractéristique de l'ordre du nanomètre.

Il existe de nombreux types de nanofibres et nanotubes de carbone de ce type, tels que les nanofibres constituées d'empilement de feuilles de graphène planes (dites "en pile d'assiettes") ou en forme de "chapeau chinois", ou bien encore les nanotubes de carbone qui sont des structures cylindriques creuses à base de feuilles de graphène enroulées sur elles-mêmes, un même nanotube comprenant souvent plusieurs cylindres concentriques à base de graphène. Ces matériaux sont généralement obtenus par croissance progressive sur un catalyseur métallique sous forme dispersée, notamment par le procédé dit de "vapodéposition" qui consiste à mettre en contact un gaz comprenant une source de carbone avec un catalyseur à base d'un métal de transition à l'état métallique, à l'état pulvérulent ou supporté. Pour plus de détails à concernant ces matériaux et leurs modes de synthèse, on pourra notamment se reporter aux articles "Nanotubes from carbon" de P.M. Ajayan (Chem. Rev., vol. 99, p.1787, 1999) et *"*Carbon nanofibers: catalytic synthesis and applications" de K. de Jong et J.W. Geus (Catal. Rev. Sci. Eng., vol. 42, p. 481, 2000).

En règle générale, quelle que soit leur structure exacte, les matériaux nanostructurés de type nanofibres et nanotubes de carbone possèdent des propriétés physico-chimiques très intéressantes.

Ainsi, les nanofibres et nanotubes de carbone ont généralement une surface spécifique relativement élevée, associée à une bonne résistance mécanique intrinsèque, ce qui en fait des supports de choix, notamment pour le dépôt d'espèces catalytiques.

En outre, compte tenu de leurs dimensions nanométriques, les nanotubes et nanofibres de carbone présentent le plus souvent des propriétés intrinsèques, intéressantes pour la catalyse. En particulier, il est connu de l'article *"*Mesoporous carbon nanotubes for use as support in catalysis and as nanosized reactors for one-dimensional inorganic material synthesis" (Appl. Catal. A, 254, 345, 2003), que les nanotubes de carbone se comportent comme des "nanoréacteurs", leur espace interne définissant un environnement particulier, au sein duquel les conditions de mise en oeuvre des réactions chimiques sont modifiées. En effet, le diamètre interne d'un nanotube est généralement de l'ordre de 1 à 100 nm, ce qui crée un espace où les conditions de rencontre entre des espèces chimiques peuvent être canalisées et optimisées. Ainsi, la mise en oeuvre de nanotubes permet d'obtenir de bons rendements à température ambiante et sous pression atmosphérique pour des réactions qui nécessiteraient, dans des conditions classiques, l'utilisation de températures et/ou de pressions plus élevées. Dans ce cadre, les nanotubes peuvent notamment être utilisées pour catalyser des réactions de Friedel-Crafts, ou bien encore des réactions de désulfuration d'effluents contenant de l'H₂S, par exemple la désulfuration ultime d'effluents de l'industrie pétrolière. A ce sujet, on pourra notamment se reporter à l'article *"*Carbon nanotubes as nanosized reactor for the selective oxidation of H2S into elemental sulfur" (Catal. Today, 91-92, 91, 2004).

Néanmoins, en marge de ces différents avantages, les composés nanostructurés à base de nanotubes ou nanofibres de carbone présentent le plus souvent une très faible taille, ce qui les rend très difficiles à manipuler et à contrôler.

En particulier, les nanotubes et nanofibres de carbone présentent une très forte tendance au poussiérage, ce qui est notamment susceptible de soulever des problèmes en termes d'environnement et de sécurité, compte tenu de leur haute réactivité.

Par ailleurs, il est aussi à noter que, compte tenu de leurs très faibles dimensions, les nanotubes et nanofibres de carbone ne sont généralement pas filtrables. Il est donc difficile de décontaminer de l'air les contenant sous forme de poussières. Il est également difficile de récupérer des catalyseurs à base de nanotubes et de nanofibres de carbone après leur utilisation dans un milieu liquide, par exemple à l'issue de réactions dans des réacteurs de type lit agité.

En outre, la faible taille des nanotubes et nanofibres de carbone s'oppose également à leur utilisation dans des réacteurs de type lit fixe, notamment compte tenu des problèmes de pertes de charge.

Pour l'ensemble de ces raisons, les nanotubes et nanofibres de carbone sont, en pratique, peu employés en tant que tels comme catalyseurs ou supports de catalyseurs dans des procédés industriels.

Pour éviter les inconvénients précités des nanofibres et des nanotubes de carbone, à savoir la difficulté de leur mise en forme, la génération de poussières qu'ils engendrent et la difficulté de leur utilisation en réacteur de type lit fixe ou agité, une solution, proposée notamment dans la demande WO 03/048039, consiste à immobiliser ces nanofibres et nanotubes sur des supports, par exemple sur des billes, feutres, fibres, mousses, extrudés, monolithes ou pastilles.

Cette solution est certes intéressante, mais elle nécessite la mise en oeuvre d'un support, qui est en général inactif en termes de catalyse. Ainsi, dans les matériaux du type de ceux décrits dans WO 03/048039, la masse du support peut représenter jusqu'à 90% de la masse totale du matériau, ce qui réduit l'efficacité globale du matériau, rapporté à sa masse totale. Outre ce phénomène de dilution de l'activité catalytique, la présence du support induit le plus souvent, dans le cas de nanotubes, une indisponibilité de l'une des entrées du tube, liée au support. De ce fait, une seule des entrées de chacun des nanotubes est disponible, ce qui limite l'efficacité catalytique de chaque nanotube et donc réduit encore l'efficacité catalytique globale du matériau.

Le document US 2003211028 montre un bloc de nanotubes de carbone enchevêtrés avec des dimensions supérieures à 1 cm x 1 cm et une densité de plus ou moins 0,7 g/cm3. Le bloc est préparé par filtration. Le document de CHENG J ET AL: "Long bundles of aligned carbon nanofibers obtained by vertical floating catalyst method", MATERIALS CHEMISTRY AND PHYSICS, ELSEVIER, vol. 87, no. 2-3, 15 octobre 2004 (2004-10-15), pages 241-245, XP004532961, ISSN : 0254-0584 montre un bloc de nanotubes de carbone enchevêtrés avec des dimensions macroscopiques qui est préparé dans un réacteur confiné.

Un but de la présente invention est de fournir des nanofibres et/ou nanotubes de carbone sous une forme présentant les avantages des nanofibres et/ou nanotubes supportés, mais non leurs inconvénients, à savoir sous une forme permettant un contrôle et une manipulation aisée des nanofibres et/ou nanotubes de carbone, tout en conservant leur activité catalytique intrinsèque et leur aptitude à servir de support de phases actives pour la catalyse.

A cet effet, la présente invention a pour objet un procédé permettant la préparation d'un matériau solide à base de nanofibres et/ou nanotubes enchevêtrés. Ce procédé comprend une étape où on fait croître sous contrainte des nanotubes et/ou des nanofibres de carbone au sein d'un réacteur confiné.

Par "réacteur confiné", on entend, au sens de la présente description, un réacteur au sein duquel les nanotubes et/ou nanofibres de carbone sont maintenus pendant leur étape de croissance. A cet effet, le réacteur utilisé dans le procédé de l'invention est muni de moyens capables de s'opposer à la sortie des nanotubes et/ou nanofibres au cours de la croissance hors du réacteur.

Le confinement des nanotubes et/ou des nanofibres dans le réacteur au cours de leur croissance est assuré de façon à ce que la croissance des nanotubes et des nanofibres de carbone soit effectuée sous contrainte. Par "croissance sous contrainte", on entend ici une croissance des nanofibres et nanotubes de carbone qui est conduite jusqu'à ce que les parois du réacteur s'opposent à la croissance de ces nanotubes ou nanofibres, c'est-à-dire jusqu'à ce que les nanotubes ou nanofibres en cours de croissance appliquent une pression sur les parois du réacteur, le matériau occupant alors l'essentiel de l'espace interne du réacteur.

De façon tout à fait surprenante, les inventeurs ont maintenant mis en évidence qu'en conduisant un procédé de croissance de nanotubes et/ou de nanofibres de carbone dans les conditions de confinement et de croissance sous contrainte telles que définies ci-dessus, on obtient des nanotubes et/ou nanofibres de carbone qui conservent leurs propriétés intrinsèques initiales, mais qui se retrouvent enchevêtrés, de telle sorte qu'ils conduisent à la formation d'un solide aggloméré, généralement monobloc, où les nanotubes et/ou nanofibres sont, pour l'essentiel, solidarisés les uns avec les autres.

Ainsi, la croissance sous contrainte réalisée selon l'invention conduit à l'obtention d'un matériau de type moulé, à base de nanotubes et/ou des nanofibres de carbone, qui a la forme de l'espace interne du réacteur utilisé. Il s'agit d'un matériau ayant des dimensions macroscopiques (généralement des dimensions au moins de l'ordre du mm, et le plus souvent de l'ordre du centimètre, voire plus), qui est donc plus aisément manipulable et contrôlable que des nanofibres et nanotubes à l'état isolé. Néanmoins, le solide obtenu conserve les propriétés intrinsèques intéressantes des nanofibres et nanotubes qui le constituent, et notamment leur haute surface spécifique, leur haute résistance mécanique, leur aptitude à servir de support pour des phases catalytiques.

En particulier, dans le cas des nanotubes, le matériau macroscopique conserve, intacts au sein de sa structure, des nanotubes qui sont essentiellement tous ouverts à chacune de leurs deux extrémités et possédant ainsi un espace interne disponible, susceptible de jouer un rôle effectif à titre de nanoréacteur notamment pour catalyse. Le procédé de l'invention comprend les étapes successives suivantes :
(a) on fait croître des nanotubes et/ou des nanofibres de carbone au sein du réacteur confiné, jusqu'à ce que les nanotubes et/ou des nanofibres formés occupent l'essentiel de l'espace interne du réacteur ; et
(b) on poursuit la croissance des nanotubes et/ou des nanofibres sous contrainte, le matériau en formation induisant alors une pression sur les parois du réacteur.

En règle générale, la solidarisation des nanotubes et/ou nanofibres est d'autant plus efficace que la durée de l'étape (b) est importante, dans la mesure où la croissance sous contrainte conduisant en règle générale à un niveau d'enchevêtrement de plus en plus complexe au cours du temps.

A ce sujet, il est toutefois à noter que, parallèlement, la pression exercée sur le réacteur croît qu'au fur et à mesure que le niveau de solidarisation augmente. En effet, dans la mesure où les nanotubes et les nanofibres présentent, de façon intrinsèque, une très bonne résistance mécanique, leur croissance sous contrainte telle que mise en oeuvre selon le procédé de l'invention induit de très fortes pressions sur les parois du réacteur utilisé, ainsi que de façon plus générale sur tous les moyens mis en oeuvre pour confiner le solide en cours de formation au sein du réacteur.

De ce fait, le niveau de solidarisation obtenu *in fine* dans le matériau est en général limité par la résistance à la pression du réacteur utilisé. On préfère donc utiliser des réacteurs ayant des parois très résistantes à la pression, par exemple des réacteurs à parois de quartz, d'épaisseur avantageusement d'au moins 1 mm, de préférence comprise entre 2 et 10 mm, par exemple de l'ordre de 4 mm. De même, il est avantageux que les moyens assurant le confinement du solide en cours de formation au sein du réacteur soient le plus résistants possible à la pression exercée.

Par ailleurs, notamment pour permettre une extraction du matériau synthétisé sous la forme d'un monobloc, il est avantageux de conduire le procédé de l'invention au sein d'un réacteur de forme cylindrique. Dans ce cadre, pour faciliter l'extraction du matériau obtenu, il est avantageux que le procédé de l'invention comprenne une étape (c) dans laquelle le matériau obtenu suite à la croissance sous contrainte est mouillé par un solvant, de préférence par de l'eau, puis où on laisse ensuite sécher le matériau mouillé ainsi obtenu, en général entre 30 et 80°C, typiquement à 50°C, de préférence sous un flux d'air. La mise en oeuvre de cette étape (c) permet d'obtenir une contraction du matériau, généralement isotrope, qui permet un démoulage plus aisé du matériau hors du réacteur. En outre, dans la plupart des cas, le solide obtenu après l'étape (c) précitée présente une tenue mécanique améliorée ainsi qu'une densité apparente plus élevée.

Selon un mode de réalisation avantageux, le procédé de l'invention est conduit en effectuant la croissance des nanotubes et nanofibres de carbone au sein du réacteur selon le procédé dit de "vapodéposition", à savoir en introduisant dans le réacteur utilisé un catalyseur à base d'un métal de transition à l'état divisé, et en injectant dans le réacteur un milieu gazeux comprenant une source de carbone à partir de laquelle les nanotubes et/ou nanofibres se forment sur le catalyseur.

Ce procédé de synthèse de nanofibres et/ou nanotubes par vapodéposition, ainsi que ses conditions de mise en oeuvre, sont bien connus de l'état de la technique, notamment des articles *"*Nanotubes from carbon" (Chem. Rev., 99, 1787, 1999) et *"*Carbon nanofibers: catalytic synthesis and applications" (Catal. Rev. Sci. Eng., 42, 481, 2000). Dans ce cadre, il est en particulier connu que, selon les conditions de synthèse utilisées dans le procédé de vapodéposition, on peut obtenir différents types de nanotubes ou de nanofibres, par exemple des tubes creux éventuellement formés de plusieurs tubes concentriques de diamètres différents, ou bien des fibres pleines.

Lorsque le procédé de l'invention est conduit en mettant en oeuvre le processus de vapodéposition, le catalyseur utilisé est de préférence à base d'un métal de transition, de préférence choisi parmi Fe, Ni, Co, Mo, et les mélanges de deux ou plusieurs de ces métaux, éventuellement avec d'autres métaux. Dans ce cadre, le métal de transition est de préférence utilisé :
- sous forme d'une poudre, ayant avantageusement une taille de particules comprise entre quelques micromètres et quelques centaines de micromètres, de préférence entre 10 et 100 micromètres ; ou
- à l'état divisé et déposé à la surface d'un support solide tel qu'un support à base d'alumine ou de silice. Dans ce cas, on peut avantageusement utiliser à titre de catalyseur un support solide préalablement imprégné d'une solution aqueuse d'un sel du métal de transition, puis calciné et réduit pour former une phase active à base du métal de transition à l'état métallique à la surface du support. Dans le cas de catalyseurs de ce type, les espèces métalliques supportées représentent en général entre 1 et 50% en masse, de préférence entre 1 et 40% en masse, plus spécialement entre 2 et 30% en masse, par rapport à la masse totale du catalyseur.

Par ailleurs, dans le cadre de l'utilisation du procédé de vapodéposition, le milieu gazeux renfermant la source de carbone précurseur des nanofibres et/ou nanotubes comprend en général, à titre de source de carbone, entre autres espèces possibles, une espèce gazeuse carbonée, de préférence un hydrocarbure, ou, alternativement, du CO, un hydrocarbure étant préféré.

Outre cette source de carbone, le milieu gazeux peut avantageusement comprendre de l'hydrogène libre, avec un rapport molaire H2 / C dans le milieu gazeux avantageusement compris entre 0,05 et 10, par exemple entre 0,1 et 5, ce rapport étant préférentiellement inférieur à 3 et plus préférentiellement inférieur à 1.

Le milieu gazeux peut en outre éventuellement contenir un gaz vecteur inerte (N₂ ou He par exemple).

Typiquement, le milieu gazeux qui est utilisé à titre de source de carbone précurseur des nanofibres et/ou nanotubes est un mélange à base d'hydrogène et de CO ou, plus avantageusement, un mélange contenant de l'hydrogène et un hydrocarbure, où l'hydrocarbure comporte de préférence de 1 à 6 atomes de carbone (hydrocarbure en C₁-C₆), de préférence entre 1 et 4 atomes de carbone, et plus avantageusement 1 ou 2 atomes de carbone.

De façon particulièrement avantageuse, le milieu gazeux utilisé comprend un mélange d'hydrogène et d'éthane, où le un rapport molaire hydrogène/éthane est de préférence compris entre 0,1 et 10, et avantageusement entre 0,5 et 6.

Selon un mode de réalisation, le milieu gazeux utilisé résulte de l'introduction conjointe d'un premier flux gazeux comprenant de l'hydrogène et d'un deuxième flux gazeux comprenant la source de carbone (de préférence un hydrocarbure, et avantageusement l'éthane,) cette source de carbone pouvant être diluée dans un flux de gaz vecteur inerte.

Selon un autre mode de réalisation, le milieu gazeux est introduit dans le réacteur sous la forme d'un unique flux gazeux comprenant un mélange d'hydrogène et d'une source de carbone de préférence un hydrocarbure, et avantageusement l'éthane, éventuellement dilués dans un flux de gaz vecteur inerte.

Quelle que soit la nature exacte du milieu gazeux utilisé, le débit d'introduction du flux gazeux concernant la source de carbone est tel que le temps de contact entre cette source de carbone et le catalyseur est compris entre 0,5 secondes et 60 secondes, plus préférentiellement entre 1 et 30 secondes.

Par ailleurs, le milieu gazeux est typiquement introduit sous une pression comprise entre 10⁵ à 10⁶ Pa, et de préférence entre 10⁵ et 5.10⁵ Pa, par exemple entre 10⁵ et 3.10⁵ Pa.

D'autre part, la température à laquelle est mise en oeuvre la croissance des nanotubes ou nanofibres de carbone est généralement supérieure à 500°C, de préférence entre 500 et 1000°C et plus préférentiellement entre 550 et 700°C.

Lorsque le procédé de l'invention est conduit en mettant en oeuvre le processus de vapodéposition précité, le réacteur confiné qui est utilisé a, en général, une entrée et une sortie qui sont toutes deux munies de moyens qui (i) permettent de laisser passer le gaz, mais qui (ii) retiennent le solide en cours de formation au sein du réacteur de façon à permettre sa croissance sous contrainte. A cet effet, on peut notamment munir l'entrée et la sortie du réacteur de feutres de carbone ou bien encore de disques de quartz perforés, permettant de laisser passer le flux gazeux mais retenant les nanotubes et/ou nanofibres en cours de formation au sein du réacteur.

Il est à noter que, lorsqu'on utilise le processus de vapodéposition dans le procédé de l'invention, la pression exercée sur les parois du réacteur et sur les moyens de confinement du solide en cours de formation au sein du réacteur sont en général particulièrement élevée lors de la croissance sous contrainte. Dans ce cadre, il se révèle souvent avantageux de conduire le procédé dans un réacteur résistant à la température et à la pression (de préférence un réacteur tubulaire, avantageusement à parois de quartz) dont l'entrée et la sortie sont chacune obturée par un feutre de carbone. La mise en oeuvre d'un tel réacteur permet en effet d'obtenir des niveaux de pression très élevés qui permettent d'assurer une solidarisation particulièrement élevée des nanofibres et/ou nanotubes dans le matériau obtenu *in fine.*

Le matériau tel qu'obtenu selon le procédé de l'invention, à base de nanotubes et/ou nanofibres de carbone enchevêtrés, est un matériau original qui présente les caractéristiques intrinsèques des nanotubes et/ou nanofibres qui le constituent, mais qui a néanmoins une forme macroscopique.

Dans un matériau tel qu'obtenu selon le procédé de l'invention les nanotubes et/ou nanofibres ont typiquement un diamètre compris entre 2 et 200 nm, ce diamètre étant généralement sensiblement uniforme sur toute la longueur de chaque tube ou fibre. La longueur de chacune des fibres peut varier en une assez large mesure notamment en fonction des dimensions du réacteur utilisé. Toutefois, en règle général, cette longueur est typiquement être comprise entre 1 et 10 000 micromètres. Ces différentes dimensions peuvent notamment être déterminées par analyse de clichés de microscopie électronique de coupes du matériau.

Par ailleurs, la surface spécifique BET d'un matériau obtenu selon le procédé de l'invention est généralement de l'ordre de celle de nanotubes ou de nanofibres individualisées. Ainsi, cette surface spécifique BET est typiquement comprise entre 1 m²/g et 1000 m²/g, typiquement entre 5 et 600 m²/gramme, par exemple entre 7 et 400 m²/gramme. La surface spécifique BET à laquelle il est fait référence ici est la celle mesurée par absorption d'azote à la température d'azote liquide, selon la norme NF X11-621. Les matériaux qui sont obtenus en mettant en oeuvre l'étape (c) précitée, présentent en général une surface spécifique BET similaire.

Par ailleurs, la masse volumique d'un matériau tel qu'obtenu selon le procédé de l'invention est en général comprise entre 0,05 et 0,80 g/cm³, typiquement entre 0,10 et 0,75 g/cm³. Cette masse volumique peut être plus élevée lorsque l'étape (c) précitée est mise en oeuvre.

Compte tenu de la spécificité du procédé de l'invention, le réacteur utilisé sert de moule pour l'obtention du matériau solide, qui prend la forme de l'espace interne du réacteur. Le procédé permet ainsi d'obtenir un solide à base de nanotubes et/ou nanofibres de carbone susceptible de présenter une grande diversité de formes, selon la forme du réacteur employé. La forme du solide peut ainsi être modulée en adaptant simplement la forme du réacteur en fonction de l'utilisation envisagée.

Un matériau tel qu'obtenu selon le procédé de l'invention inclut en général le catalyseur à partir duquel il a été synthétisé. Toutefois, si on le souhaite, ce catalyseur peut être éliminé par lavage et/ou traitement chimique, auquel cas le matériau obtenu est essentiellement constitué de nanofibres et/ou de nanotubes de carbone enchevêtrées.

En ce qui concerne les applications du matériau spécifique obtenu selon le procédé de l'invention, il est à noter que ce matériau présente des propriétés physico-chimiques qui le rendent adapté à un grand nombre d'applications industrielles. Dans ce cadre il peut notamment être utilisé dans la plupart des utilisations connues des nanofibres et/ou nanotubes, à l'exception des applications requérant l'utilisation de nanofibres et/ou nanotubes à l'état individualisé.

Ainsi, un matériau tel qu'obtenu selon le procédé de l'invention peut notamment être utilisé, en tant que tel, à titre de catalyseur, notamment en milieu liquide par exemple pour la catalyse de réactions de Friedel-Crafts, ou des réactions de désulfuration d'effluents contenant de l'H₂S, par exemple la désulfuration ultime d'effluents de l'industrie pétrolière, ou bien encore pour des réactions d'hydrogénation de composés oléfiniques ou aromatiques.

Par ailleurs, les matériaux obtenus selon le procédé de l'invention peuvent également être utilisés comme supports d'espèces catalytiques. Dans ce cadre, les phases actives catalytiques peuvent notamment être déposées sur le matériau par imprégnation précurseur et calcination. Dans ce cadre, il est préférable que la calcination ait lieu à une température inférieure ou égale à 600°C, de préférence inférieure à 550°C, par exemple entre 300 et 500°C, typiquement entre 300 et 400°C. De façon plus générale, il est à souligner que, lorsqu'on souhaite traiter thermiquement un matériau à base de nanofibres et/ou nanotubes enchevêtrés selon le procédé de l'invention, il est préférable de rester dans les gammes de température précitées pour ne pas dégrader le matériau.

Les matériaux obtenus selon le procédé de l'invention peuvent par ailleurs être avantageusement utilisés pour filtrer des milieux gazeux contenant des particules en suspension, par exemple pour décontaminer des atmosphères viciées comprenant des poussières ou des aérosols.

Enfin, les inventeurs ont également mis en évidence que les matériaux à base de nanotubes et/ou nanofibres enchevêtrés tels qu'obtenus selon le procédé de l'invention peuvent être utilisés pour une application plus spécifique, à savoir pour emprisonner, ou plus généralement pour retenir des espèces organiques hydrophobes. Cette rétention permet en général une adsorption et/ou absorption des espèces organiques hydrophobes sur et/ou dans le matériau.

Dans ce cadre, les travaux des inventeurs ont permis d'établir qu'en mettant en contact un matériau tel qu'obtenu selon le procédé de l'invention avec des espèces hydrophobes tels que des hydrocarbures (ou des dérivés d'hydrocarbures, par exemple halogénés ou soufrés), on obtient un emprisonnement efficace desdites espèces hydrophobes par le matériau, et ce tout particulièrement lorsqu'il est à base de nanotubes. En effet, le plus souvent, les nanotubes, de par leur structure creuse, s'avèrent en général plus avantageux que des nanofibres pleines pour ce type d'application.

La solidarisation des espèces hydrophobes vis-à-vis du matériau qui est obtenu dans ce cadre s'avère en outre d'une telle efficacité qu'elle permet de retenir efficacement des espèces hydrophobes même lorsqu'elles sont initialement présentes dans un milieu liquide aqueux. Cette capacité peut notamment être mise à profit pour éliminer des composés hydrophobes présents dans un milieu aqueux. Pour ce faire, il suffit de mettre en contact le milieu aqueux à traiter avec le matériau à base de nanotubes et/ou nanofibres, puis d'extraire le solide du milieu, par exemple par filtration, ou bien, plus simplement, en le retirant manuellement du milieu. Il est mentionné un procédé de décontamination d'un milieu aqueux contenant des agents polluants organiques hydrophobes (hydrocarbures aliphatiques ou aromatiques (benzène, toluène, composés polycycliques), composés hydrocarbonés aliphatiques ou aromatiques comprenant des hétéroatomes, carburants (essence, diesel), ou dioxines, par exemple), comprenant :
- une mise en contact du milieu aqueux à traiter avec un matériau tel qu'obtenu selon le procédé de l'invention, ce par quoi les agents polluants sont retenus par le matériau ; puis
- une extraction du matériau hors du milieu, ce par quoi on élimine les agents polluants.

Ce procédé peut notamment être utilisé pour décontaminer des eaux usées ou contaminées par des hydrocarbures ou d'autres agents polluants hydrophobes (eaux usées des raffineries pétrolières ou d'autres industries chimiques, eaux stagnantes des bacs de rétention, eaux des zones portuaires, eaux au voisinage de plates-formes pétrolières, eaux de mer contaminée par une marée noire). Le procédé peut être utilisé pour extraire des composés hydrophobes initialement présents à l'état de traces en milieu aqueux. Dans ce cas, le procédé comprend avantageusement une étape préliminaire où on ajoute au milieu à traiter un solvant organique hydrophobe, préalablement à la mise en contact du milieu avec le matériau préparé selon le procédé de l'invention. Le solvant organique hydrophobe introduit, qui présente une bonne affinité vis-à-vis des espèces organiques à extraire et du matériau nanostructuré, permet alors de concentrer les espèces hydrophobes à extraire, ce qui facilite leur séparation. Dans ce cas particulier, les espèces sont retenues par le matériau comprennent un mélange du solvant organique et des espèces organiques à extraire.

Il est à noter que l'utilisation d'un matériau préparé selon le procédé de l'invention s'avère beaucoup plus intéressante que des matériaux de type charbon actif pour réaliser la rétention d'espèces organiques et leur extraction.

A ce sujet, les travaux des inventeurs ont en particulier permis d'établir que, lorsqu'on met en contact des composés hydrophobes de type hydrocarbures avec un matériau préparé selon le procédé de l'invention, ces composés hydrophobes se retrouvent retenus par le matériau de façon quasi-instantanée dès leur mise en contact avec le matériau, alors qu'avec des matériaux de type charbon actif, on observe une absorption des composés hydrophobes par le matériau beaucoup plus lente.

De plus, les inventeurs ont mis en évidence que la rétention d'espèces hydrophobes particulièrement efficace qui est obtenue avec le matériau préparé selon le procédé de l'invention s'avère réversible.

Plus précisément, on constate que, un matériau préparé selon le procédé de l'invention retenant des composés hydrophobes est introduit dans un solvant solubilisant lesdits composés hydrophobes, par exemple de l'éthanol, les composés hydrophobes migrent du matériau vers le solvant. En d'autres termes, les matériaux préparés selon le procédé de l'invention retenant des espèces hydrophobes peuvent être lavés par des solvants ayant une bonne affinité pour ces composés hydrophobes, par exemple de l'éthanol ou de l'acétone, ce qui permet leur recyclage et leur réutilisation ultérieure.

Cette possibilité de recyclage est tout à fait inattendue au vu des résultats qu'on obtient en mettant en contact des matériaux de type charbon avec des agents hydrophobes. En effet, dans ce cas, les matériaux de type charbon actif restent généralement pollués par les agents hydrophobes lorsqu'on cherche à les laver par des solvants, sauf à mettre en oeuvre des traitements chimiques ou thermiques lourds et complexes qui se révèlent peu avantageux en termes de rapport qualité de recyclage/coût.

Ces capacités inattendues des matériaux nanostructurés à base de carbone, permettant la rétention très efficace, mais néanmoins réversible, des espèces hydrophobes pouvant notamment être utilisées pour extraire des composés hydrophobes initialement présents dans un milieu aqueux, en les transférant du milieu aqueux initial vers un milieu solvant tel que de l'éthanol.

Dans ce cadre, on mentionne un procédé d'extraction des composés hydrophobes initialement présents en milieu aqueux comprenant les étapes successives suivantes :
- on met en contact le milieu aqueux contenant les composés hydrophobes à extraire avec un matériau selon l'invention, ce par quoi ces composés se retrouvent retenus par le matériau ;
- on extrait le matériau contenant les composés hydrophobes hors du milieu, par exemple par filtration, ou bien manuellement ;
- on place le solide ainsi extrait, contenant les composés hydrophobes, dans un milieu solubilisant les composés hydrophobes, de préférence un solvant polaire ou hydrophile, par exemple de l'éthanol ou de l'acétone, ce par quoi les espèces hydrophobes initialement retenues par le matériau nanostructuré sont relarguées du matériau vers le solvant, si bien qu'on récupère *in fine* les composés hydrophobe dans ledit solvant ; et
- on récupère le solvant contenant les agents hydrophobes (et on élimine éventuellement le solvant si on souhaite récupérer les agents hydrophobes en tant que tels).

Ce procédé d'extraction peut avantageusement être utilisé pour la décontamination de milieux aqueux contenant des traces de polluants hydrophobes tels que des hydrocarbures.

Dans ce type d'application, on peut utiliser le procédé de façon cyclique, en réalisant plusieurs traitements successifs d'un ou de plusieurs milieu(x) aqueux pollué(s), et en récupérant à l'issue de chaque traitement les traces de polluant dans un même milieu solvant, qui se concentre donc progressivement en les agents polluants extraits. Ce mode de mise en oeuvre permet, d'une part, d'utiliser un même matériau d'extraction, recyclé à l'issue de chaque étape, et, d'autre part, d'obtenir une concentration des polluants ce qui facilite leur transport, leur stockage, ainsi que leur traitement, ce qui permet notamment de limiter le volume final des déchets.

Différents aspects et avantages de l'invention ressortiront encore de la Figure ci-annexée et des exemples illustratifs exposés ci-après.
La Figure 1 ci-annexée est une photographie d'un matériau préparé selon le procédé de l'invention, tel qu'obtenu dans l'exemple 1 exposé ci-après.
La Figure 2 est un cliché obtenu par microscopie électronique du matériau de la Figure 1 (grossissement : 15 000 fois).
Les Figures 3a à 3d sont une succession de photographies illustrant la mise en oeuvre de l'exemple 2 ci-après.

### EXEMPLES

### EXEMPLE 1

### Procédé de préparation d'un matériau à base de nanotubes enchevêtrés

Dans un réacteur tubulaire cylindrique en quartz (épaisseur de parois : 4mm, diamètre interne: 30 mm, longueur: 90 mm), on a introduit 1g de catalyseur (poudre d'alumine comprenant 40% de Fe).

On a muni chacune des deux entrées du réacteur cylindrique d'un feutre de carbone, solidement solidarisé au réacteur au moyen de fil de fer.

On a alors injecté dans le réacteur un flux gazeux constitué d'un mélange d'hydrogène et d'éthane (rapport H₂ / C₂H₆ de 2/3), avec un débit total de 100 mL.min⁻¹, à une température de 640°C.

On a alors observé la croissance de nanotubes de carbone, qu'on a laissé se poursuivre jusqu'à ce que la croissance s'effectue sous contrainte. La réaction a été conduite pendant une durée totale de 4 heures.

On a ainsi obtenu un solide cylindrique monobloc à base de nanotubes enchevêtrés, ayant la forme de l'espace interne du réacteur.

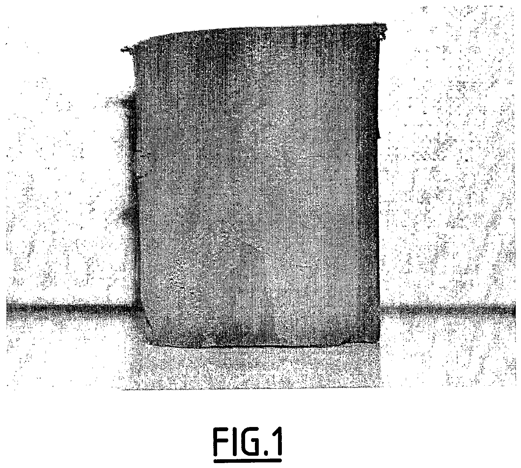

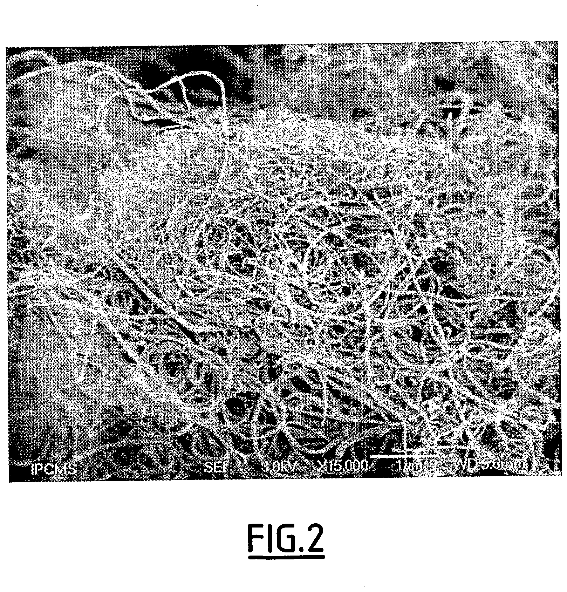

Les Figures 1 et 2 ci-annexées sont des photographies de ce matériau. La Figure 1 montre que, macroscopiquement, le matériau est un monobloc ayant la forme cylindrique du volume interne du réacteur utilisé. La figure 2 illustre la structure intime du matériau et l'état d'enchevêtrement des nanotubes.

Le solide cylindrique monobloc obtenu dans le cadre de cet exemple a été extrait du réacteur cylindrique au moyen d'une presse hydraulique. Il est toutefois également envisageable d'extraire le solide en le mouillant par de l'eau, puis en séchant le matériau ainsi mouillé, par exemple sous flux d'air à une température de l'ordre de 50° C. On obtient alors une contraction isotrope du solide qui permet un démoulage plus aisé.

### EXEMPLE 2

### Utilisation d'un matériau à base de nanotubes enchevêtrés pour l'extraction d'espèces organiques présentes dans un milieu aqueux.

Dans un bécher (b1) de 100 mL, on a introduit 60 ml d'eau distillée, puis 3 mL de benzène additionné d'un colorant jaune fluorescent (4,4-difluoro-1,3,5,7,8-pentanéthyl-4-bora-3a,4a-diaza-S-indacène) permettant sa visualisation. On a ainsi obtenu une nappe de benzène colorée en jaune déposée à la surface de l'eau.

On a introduit dans le milieu ainsi obtenu le solide à base de nanotubes enchevêtrés obtenu dans l'exemple 1, en trempant ce solide dans le milieu. On a immédiatement observé, visuellement, la disparition de la coloration jaune, montrant la rétention instantanée du benzène.

Le solide à base de nanotubes enchevêtrés a alors été retiré du milieu aqueux, puis il a été introduit dans un bécher (b2) contenant 60 ml d'éthanol. On a alors observé la migration du benzène et du colorant vers l'éthanol, qui prend la coloration jaune du colorant associé au benzène.

Le solide à base de nanotubes enchevêtrés, lavé du benzène, a alors été retiré de l'éthanol, ce qui permet son recyclage pour des extractions ultérieures.

Pour illustrer cette possibilité de recyclage, le solide à base de nanotubes enchevêtrés ainsi lavé a été plongé dans un bécher (b3) similaire au bécher (b1) initial, à savoir contenant une nappe de 3 mL de benzène colorée surnageant sur 60 mL d'eau. On a immédiatement observé une disparition de la coloration jaune, montrant que le matériau recyclé retient le benzène avec la même efficacité que le matériau initial.

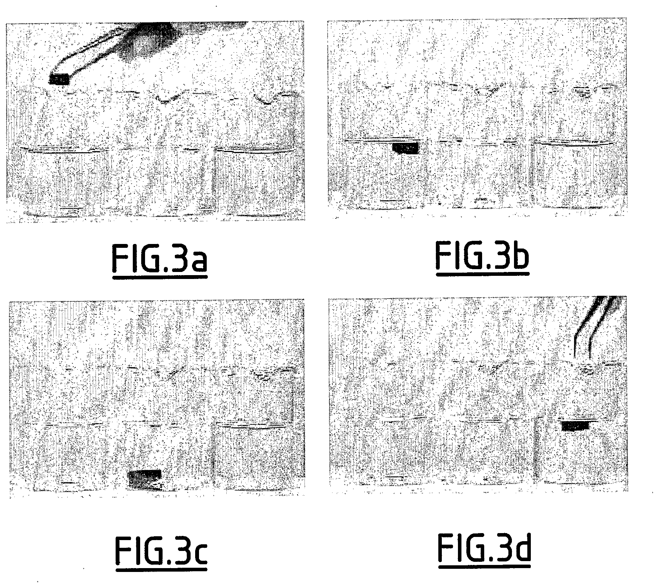

Les photographies des figures 3a à 3d ci jointes illustrent le présent exemple.

Sur la figure 3a, sont présents, de gauche à droite :
- le bécher (b1) contenant l'eau et la nappe de benzène colorée surnageante
- le bécher (b2) contenant l'éthanol
- un bécher (b3) similaire au bécher (b1), contenant l'eau et la nappe de benzène colorée surnageante.

La figure 3b est une photographie de l'étape où le solide à base de nanotubes enchevêtrés est déposé à la surface du milieu liquide du bécher (b1), et où on constate la disparition visuelle de la phase surnageante.

Sur la Figure 1c, on voit le solide à base de nanotubes enchevêtrés porteur des nanofibres de carbone, qui a été retiré du bécher (b1) et qui est plongé dans le bécher (b2), ce par quoi le benzène et le colorant migrent vers l'éthanol, l'éthanol se colorant alors en jaune.

Sur la Figure 1d, le solide à base de nanotubes enchevêtrés, tel qu'obtenu après le lavage illustré sur la Figure 1c, est déposé à la surface du milieu liquide du bécher (b3), et où on constate la disparition visuelle de la phase surnageante.

## Revendications

1. Procédé de préparation d'un matériau solide de type moulé, ayant des dimensions macroscopiques, à base de nanofibres et/ou nanotubes enchevêtrés, comprenant les étapes successives suivantes :
(a) on fait croître des nanotubes et/ou des nanofibres de carbone au sein du réacteur confiné, jusqu'à ce que les nanotubes et/ou des nanofibres formées occupent l'essentiel de l'espace interne du réacteur ; et
(b) on poursuit la croissance des nanotubes et/ou des nanofibres sous contrainte, le matériau en formation induisant alors une pression sur les parois du réacteur.

2. Procédé selon la revendication 1, mis en oeuvre dans un réacteur à parois de quartz.

3. Procédé selon l'une quelconque des revendications 1 à 2, qui est conduit en effectuant la croissance des nanotubes et nanofibres de carbone en introduisant dans le réacteur utilisé un catalyseur à base d'un métal de transition à l'état divisé, et en injectant dans le réacteur un milieu gazeux comprenant une source de carbone à partir de laquelle les nanotubes et/ou nanofibres se forment sur le catalyseur.

4. Procédé selon la revendication 3, où le catalyseur utilisé est à base d'un métal de transition choisi parmi Fe, Ni, Co, Mo et les mélanges de deux ou plusieurs de ces métaux.

5. Procédé selon la revendication 3 ou la revendication 4, où le catalyseur utilisé est un métal de transition sous forme d'une poudre.

6. Procédé selon la revendication 3 ou la revendication 4, où le catalyseur utilisé est un métal de transition à l'état divisé déposé à la surface d'un support solide.

7. Procédé selon l'une quelconque des revendications 3 à 6, où le milieu gazeux comprenant la source de carbone précurseur des nanofibres et/ou nanotubes comprend un hydrocarbure.

8. Procédé selon l'une quelconque des revendications 3 à 7, où le milieu gazeux comprend, en plus de la source de carbone, de l'hydrogène libre, avec un rapport molaire H₂/C dans le milieu gazeux compris entre 0,05 et 10.

9. Procédé selon l'une quelconque des revendications 3 à 8, où le milieu gazeux comprenant la source de carbone précurseur des nanofibres et/ou nanotubes est un mélange contenant de l'hydrogène et un hydrocarbure en C₁-C₆.

10. Procédé selon la revendication 9 où le mélange d'hydrogène et d'hydrocarbure est un mélange d'hydrogène et d'éthane.

11. Procédé selon l'une quelconque des revendications 3 à 10, où le milieu gazeux comprenant la source de carbone est introduit sous une pression comprise entre 10⁵ et 10⁶ Pa.

12. Procédé selon l'une quelconque des revendications 3 à 11, où la température à laquelle est mise en oeuvre la croissance des nanotubes ou nanofibres de carbone est supérieure à 500° C.

13. Procédé selon l'une quelconque des revendications 3 à 12, où le réacteur confiné qui est utilisé a une entrée et une sortie qui sont toutes deux munies de moyens qui (i) permettent de laisser passer le gaz, mais qui (ii) retiennent le solide en cours de formation au sein du réacteur de façon à permettre sa croissance sous contrainte.

14. Procédé selon la revendication 13, où l'entrée et la sortie du réacteur sont munies de feutres de carbone ou de disques de quartz perforés.

15. Procédé selon l'une quelconque des revendications 1 et 2, qui est mis en oeuvre dans un réacteur de forme cylindrique et qui comprend une étape (c) dans laquelle le matériau obtenu à l'issue de la croissance sous contrainte des nanofibres et/ou des nanotubes est mouillé par un solvant, puis où on laisse sécher le matériau mouillé ainsi obtenu.

## Patentansprüche

1. Verfahren zum Vorbereiten eines Festkörpermaterials des geformten Typs, das makroskopische Abmessungen besitzt, auf der Grundlage von verwachsenen Nanofasern und/oder Nanoröhren, das die folgenden aufeinander folgenden Schritte umfasst:
(a) Aufwachsenlassen von Nanoröhren und/oder Nanofasern aus Kohlenstoff in einem geschlossenen Reaktor, bis die gebildeten Nanoröhren und/oder Nanofasern einen wesentlichen Anteil des Innenraums des Reaktors einnehmen; und
(b) Fortsetzen des Aufwachsenlassens der Nanoröhren und/oder der Nanofasern unter Beanspruchung, wobei das sich formende Material dann auf die Wände des Reaktors einen Druck ausübt.

2. Verfahren nach Anspruch 1, das in einem Reaktor mit Quarzwänden ausgeführt wird.

3. Verfahren nach einem der Ansprüche 1 bis 2, das ausgeführt wird, indem das Aufwachsenlassen von Nanoröhren und Nanofasern aus Kohlenstoff durch Einbringen eines Katalysators auf der Basis eines Übergangsmetalls im unterteilten Zustand in den verwendeten Reaktor ausgeführt wird und indem in den Reaktor ein gasförmiges Medium eingeleitet wird, das eine Kohlenstoffquelle enthält, anhand ausgehend von der sich die Nanoröhren und/oder Nanofasern an dem Katalysator bilden.

4. Verfahren nach Anspruch 3, wobei der verwendete Katalysator auf einem Übergangsmetall basiert, das unter Fe, Ni, Co, Mo und Gemischen aus zwei oder mehreren dieser Metalle gewählt ist.

5. Verfahren nach Anspruch 3 oder nach Anspruch 4, wobei der verwendete Katalysator ein Übergangsmetall in Pulverform ist.

6. Verfahren nach Anspruch 3 oder Anspruch 4, wobei der verwendete Katalysator ein Übergangsmetall im unterteilten Zustand ist, das auf die Oberfläche eines festen Trägers aufgebracht ist.

7. Verfahren nach einem der Ansprüche 3 bis 6, wobei das gasförmige Medium, das die Kohlenstoffquelle enthält, die ein Vorläufer der Nanofasern und/oder Nanoröhren ist, einen Kohlenwasserstoff enthält.

8. Verfahren nach einem der Ansprüche 3 bis 7, wobei das gasförmige Medium zusätzlich zu der Kohlenstoffquelle freien Wasserstoff in einem Molverhältnis H₂/C in dem gasförmigen Medium im Bereich von 0,05 bis 10 enthält.

9. Verfahren nach einem der Ansprüche 3 bis 8, wobei das gasförmige Medium, das die Kohlenstoffquelle, die ein Vorläufer der Nanofasern und/oder Nanoröhren ist, enthält, ein Gemisch ist, das Wasserstoff und einen Kohlenwasserstoff aus C₁-C₆ enthält.

10. Verfahren nach Anspruch 9, wobei das Gemisch aus Wasserstoff und Kohlenwasserstoff ein Gemisch aus Wasserstoff und Ethan ist.

11. Verfahren nach einem der Ansprüche 3 bis 10, wobei das gasförmige Medium, das die Kohlenstoffquelle enthält, unter einem Druck im Bereich von 10⁵ bis 10⁶ Pa eingeleitet wird.

12. Verfahren nach einem der Ansprüche 3 bis 11, wobei die Temperatur, bei der die Nanoröhren und Nanofasern aus Kohlenstoff aufwachsen, höher als 500 °C ist.

13. Verfahren nach einem der Ansprüche 3 bis 12, wobei der geschlossene Reaktor, der verwendet wird, einen Eingang und einen Ausgang besitzt, die beide mit Mitteln versehen sind, die (i) ermöglichen, Gas durchzulassen, jedoch (ii) den Feststoff während der Bildung innerhalb des Reaktors zurückhalten, so dass sein Wachstum unter Beanspruchung ermöglicht wird.

14. Verfahren nach Anspruch 13, wobei der Eingang und der Ausgang des Reaktors mit Kohlenstofffilzen oder perforierten Quarzscheiben versehen ist.

15. Verfahren nach einem der Ansprüche 1 und 2, das in einem Reaktor mit zylindrischer Form ausgeführt wird und das einen Schritt (c) umfasst, in dem das beim Wachstum unter Beanspruchung von Nanofasern und/oder Nanoröhren erhaltene Material mit einem Lösungsmittel angefeuchtet wird, woraufhin das somit erhaltene angefeuchtete Material trocknen kann.

## Claims

1. A process for preparing a solid material of the moulded type, with macroscopic dimensions, based on tangled nanofibres and/or nanotubes, comprising the following successive steps:
(a) carbon nanotubes and/or nanofibres are caused to grow within a confined reactor, until the nanotubes and/or nanofibres formed occupy the essential of the internal space within the reactor, and
(b) growth of the nanotubes and/or nanofibres under constraint is continued, whereby the material in formation applies pressure against the reactor walls.

2. The process according to claim 1, carried out in a reactor having quartz walls.

3. The process according to any one of claims 1 to 2, which is carried out by growing the carbon nanotubes and nanofibres by introducing a catalyst based on a transition metal in a divided state into the reactor used and injecting into the reactor a gaseous medium comprising a carbon source from which the nanotubes and/or nanofibres form on the catalyst.

4. A process according to claim 3, wherein the catalyst used is based on a transition metal selected from Fe, Ni, Co, Mo and mixtures of two or more of these metals.

5. A process according to claim 3 or claim 4, wherein the catalyst used is a transition metal in the form of a powder.

6. A process according to claim 3 or claim 4, wherein the catalyst used is a transition metal in the divided state deposited on the surface of a solid carrier.

7. A process according to any one of claims 3 to 6, wherein the gaseous medium comprising the precursor carbon source for the nanofibres and/or nanotubes comprises a hydrocarbon.

8. A process according to any one of claims 3 to 7, wherein the gaseous medium comprises free hydrogen in addition to the carbon source, with an H₂/C molar ratio in the gaseous medium of between 0.05 and 10.

9. A process according to any one of claims 3 to 8, wherein the gaseous medium comprising the precursor carbon source for the nanofibres and/or nanotubes is a mixture containing hydrogen and a C₁-C₆ hydrocarbon.

10. A process according to claim 8, wherein the mixture of hydrogen and hydrocarbon is a mixture of hydrogen and ethane.

11. A process according to any one of claims 3 to 10, wherein the gaseous medium comprising the carbon source is introduced at a pressure of between 10⁵ and 10⁶ Pa.

12. A process according to any one of claims 3 to 11, wherein the temperature at which growth of the carbon nanotubes or nanofibres takes place is above 500°C.

13. A process according to any one of claims 3 to 12, wherein the confined reactor used has an inlet and an outlet which are both fitted with means which (i) allow the gas to pass, but which (ii) hold the solid which is in the course of being formed back within the reactor in such a way as to allow it to grow under constraint.

14. A process according to claim 13, wherein the reactor inlet and outlet are fitted with carbon felts or perforated quartz disks.

15. A process according to any one of claims 1 or 2, which is carried out in a reactor of cylindrical shape and which comprises a stage (c) in which the material obtained from growth of the nanofibres and/or nanotubes under constraint is wetted by a solvent, and then the wetted material so obtained is allowed to dry.
